# EUROPÄISCHE PATENTSCHRIFT

(11) **EP 1 031 477 B1**
(45) Veröffentlichungstag und Bekanntmachung des Hinweises auf die Patenterteilung: **08.09.2004**
(21) Anmeldenummer: 99103694.8
(22) Anmeldetag: 25.02.1999
(51) Int. Cl.: B60R 21/32

(54) **Vorrichtung und Verfahren zum Erfassen eines Objektes oder einer Person im Innenraum eines Fahrzeugs**
Apparatus and method for sensing an object or a passenger inside an automotive vehicle using a laser beam
Dispositif et méthode pour détecter un objet ou un passager au sein de l'habitacle d' un véhicule automobile et au moyen d' un rayonnement laser

(43) Veröffentlichungstag der Anmeldung: 30.08.2000
(73) Patentinhaber: SIEMENS AKTIENGESELLSCHAFT, 80333 München (DE)
(72) Erfinder: Roth, Christoph, Dr., Tokyo 141-8641 Shinagawa-Ku (JP); Hamperl, Reinhard, 93096 Köfering (DE); Rösl, Reinhard, 93173 Wenzenbach (DE); Waldmann, Alexander, 93059 Regensburg (DE); Stierle, Thomas, 93059 Regensburg (DE); Mader, Gerhard, Dr., 93107 Thalmassing (DE)

(56) Entgegenhaltungen:
- EP-A- 0 734 921
- US-A- 5 490 069
- US-A- 5 585 625
- US-A- 5 653 462

## Beschreibung

Die Erfindung betrifft eine Vorrichtung und ein Verfahren zum Erfassen eines Objektes oder einer Person im Innenraum eines Fahrzeugs gemäß Oberbegriff der Patentansprüche 1 und 10.

Weit in Richtung Armaturenbrett vorverlagerte Personen wie auch Kinder in sogenannten Reboard-Kindersitzen auf dem Beifahrersitz sind während des Fahrzeugbetriebes eines mit Airbag versehenen Kraftfahrzeuges der Gefahr ausgesetzt, durch die Aufblaswucht des Airbags bei einem Unfall Verletzungen zu erleiden. Moderne Steuerungssysteme für den Personenschutz sind bestrebt, den Airbag in derartigen Situationen abzuschalten oder mit verminderter Wucht aufzublasen, um die Gefahr einer Verletzung eines Insassen abzuwenden. Zur Ermittlung der Insassenposition im Fahrzeug werden vorzugsweise berührungslose, optische Sensoren eingesetzt.

Eine Vorrichtung zum berührungslosen Erkennen eines Objektes oder einer Person im Innenraum eines Fahrzeugs gemäß Oberbegriff der Patentansprüche 1 und 10 ist aus der EP 0 669 227 A1 bekannt. Dabei wird der Fahrzeugsitz durch eine Anzahl von Leuchtdioden bestrahlt. Vom Sitz bzw. einer Person oder einem Objekt auf dem Fahrzeugsitz reflektierte Strahlen werden durch ein Fotodetektorfeld aufgenommen.

Als Lichtquelle des optischen Erfassungssystems wird vorzugsweise ein Laser eingesetzt, der eine aufgrund seiner monochromen Strahlung eine ortsgenaue Abtastung ermöglicht. Gewöhnlich werden Laserdioden und insbesondere Halbleiterlaserdioden als Sender verwendet.

Um eine andauernde energetische Belastung von Personen im Fahrzeuginnenraum durch den Laser zu vermeiden, wird der Laser pulsbetrieben. Aber auch in diesem Betriebsmodus darf der Insasse keinesfalls aufgrund der ausgesendeten Laserpulse gesundheitlich beeinträchtigt werden.

Weiterhin weist die bekannte Vorrichtung den Nachteil auf, daß der optische Empfänger einen reflektierten Laserpuls mit sehr hohem Energieinhalt empfängt, wenn ein Objekt sehr nahe am Laser angeordneten ist und der Sendeimpuls einen hohen Energieinhalt aufweist. Aufgrund des geringen Abstandes zwischen der optischen Erfassungseinrichtung und dem Objekt geht nur ein geringes Maß der ausgesendeten Energie verloren. Dieser Effekt wird verstärkt, wenn das Objekt stark reflektierend wirkt. Bei einer solchen großen Energieaufnahme durch den optischen Empfänger besteht die Gefahr, daß der nachgeschaltete Verstärker im Sättigungsbereich betrieben wird und damit eine genaue Erfassung des Objektes bzw. des Abstandes des Objektes von der optischen Erfassungseinrichtung nicht mehr möglich ist.

Aufgabe der Erfindung ist es deshalb, die bekannte Vorrichtung und das bekannte Verfahren zum Erfassen eines Objektes oder einer Person im Innenraum eines Fahrzeugs derart weiterzubilden, daß eine Gefährdung von Personen im Innenraum infolge der ausgesendeten Laserstrahlung jederzeit ausgeschlossen werden kann und gleichzeitig korrekte Erfassungsdaten bereitgestellt werden.

Der die Vorrichtung betreffende Teil der Erfindungsaufgabe wird durch die Merkmale des Patentanspruchs 1 gelöst. Der das Verfahren betreffende Teil der Erfindungsaufgabe wird durch die Merkmale des Patentanspruchs 10 gelöst.

Dabei ist eine Steuereinrichtung vorgesehen, die den Energieinhalt eines Laserpulses abhängig von einer durch Auswertung eines reflektierten Laserpulses gewonnenen Kenngröße einstellt. Dabei wird vorzugsweise der unmittelbar vor dem neuerlichen Aussenden des Laserpulses empfangene reflektierte Laserpuls ausgewertet. Die vom Laser abgegebene Energie wird damit jederzeit auf ein Maß reduziert, das einerseits ausreicht, um ein Objekt oder eine Person hinreichend bestimmt zu erkennen, andererseits aber eine Gefährdung von Insassen ausschließt. Damit wird die Vorrichtung hinsichtlich ihrer Erfassungsempfindlichkeit und ihrer Strahlungsbelastung optimiert betrieben.

Der Energieinhalt eines abgegebenen Laserpulses ist bestimmt durch das Produkt aus Sendeleistung und Pulsdauer. Die vorzugsweise als Mikroprozessor oder auch als Schaltung mit diskreten Bauelementen ausgebildete Steuereinrichtung stellt vorzugsweise entweder die Sendeleistung des Lasers oder die Pulsdauer nach. Die Sendeleistung wird vorzugsweise über einen Betriebsstrom des Lasers eingestellt.

Kenngrößen eines aufgenommen, reflektierten Laserpulses sind insbesondere seine Stärke/Amplitude oder seine Leistung oder sein Energieinhalt. Der optische Empfänger ist dabei gewöhnlich ein Wandler, der optische Signale in elektrische Signale umsetzt. Demzufolge nimmt die Steuereinrichtung vorzugsweise ein von einem solchen optischen Empfänger geliefertes elektrisches Signal auf und wertet eine oder mehrere der vorbeschriebenen Kenngrößen aus.

Eine vorteilhafte Steuervorschrift wird im folgenden anhand der Auswertung des Energieinhalts eines aufgenommenen reflektierten Laserpulses erläutert. Der Energieinhalt des reflektierten Laserpulses ist durch das Produkt aus Leistung und Pulsdauer bestimmt. Die Steuervorschrift sieht vor, daß für den Fall, daß der Energieinhalt des reflektierten Laserpulses über einem Empfindlichkeits-Grenzwert liegt - welcher den Energieinhalt eines reflektierten Laserpulses kennzeichnet, der gerade noch zum Erfassen eines Objektes oder einer Person tragbar ist -, der Energieinhalt des folgenden sendeseitigen Laserpulses ausgehend von seinem bisherigen, aktuellen Energieinhalt reduziert wird. Die Auswertung des reflektierten Laserpulses hat gezeigt, daß die Vorrichtung mit einer zum Erfassen eines Objektes oder einer Person zu hohen Laserleistung betrieben wird. Die Laserleistung wird deshalb vermindert. Dabei kann die Vorrichtung als Regelvorrichtung ausgebildet sein, die den Energieinhalt des reflektierten Laserpulses als Regelgröße auf den vorgegebenen Empfindlichkeits-Grenzwert als Sollwert regelt.

Wird dagegen ein reflektierter Laserpuls mit einem äußerst geringen Energieinhalt empfangen, so wird erfindungsgemäß die Laserleistung erhöht, zumindest bis empfangsseitig der Empfindlichkeits-Grenzwert als Energieinhalt erfaßt werden kann.

Der Energieinhalt eines reflektierten Laserpulses bei einer derartigen Vorrichtung ist im wesentlichen bestimmt durch den Abstand zwischen einem Objekt, an der der ausgesendete Laserpuls reflektiert wird, und dem optischen Empfänger und insbesondere durch die Streueigenschaften des bestrahlten Objektes oder der bestrahlten Person. Je weiter das Objekt entfernt ist, desto geringer ist der Energieinhalt des reflektierten Laserpulses. Je heller die Oberfläche des Objektes ist, desto bessere Streueigenschaften weist es auf. In einer vorteilhaften Weiterbildung der Erfindung wird durch die Steuereinrichtung der Energieinhalt oder die Leistung oder die Amplitude des reflektierten Laserimpulses ermittelt, um den Abstand und damit die Position des Objektes oder des Insassen feststellen zu können. Aufgrund dieser Eigenschaften der Vorrichtung wird sich regelmäßig eine Sendeleistungs-Anpassung dann einstellen wenn ein Objekt oder eine Person seinen/ihren Abstand zur Erfassungsvorrichtung wesentlich ändert.

Der Gefahr einer zunehmend höher geregelten Sendeleistung des Lasers und damit einer Instabilität der Regelung aufgrund keiner oder schwach empfangener reflektierter Laserpulse beim Aussenden eines Laserpulses "ins Leere" wird durch die Anordnung der Vorrichtung begegnet: Aufgrund der Funktion der Vorrichtung soll der Laser entweder einen Fahrzeugsitz oder den Gefahrenbereich vor einem Airbag abtasten. Dabei ist der Laser auch bei Nichtvorhandensein eines Objektes oder eines Insassen in jedem Fall auf eine fest installierte Fahrzeugstruktur gerichtet, die einen maximalen Abstand von etwa einem Meter zur Erfassungsvorrichtung aufweist. Soll der Laser den Gefahrenbereich vor einem Airbag abtasten und ist dabei im Dachhimmel angeordnet, so wird ein emittierter Laserpuls zumindest vom Fußraum des Fahrzeugs reflektiert. In einer vorteilhaften Weiterbildung der Erfindung wird das Problem einer instabilen Regelung zusätzlich dadurch gelöst, daß der Energieinhalt eines ausgesendeten Laserpulses auf einen Gefährdungs-Grenzwert beschränkt wird. Damit wird ein zur vorbeschriebenen Anordnung der Erfassungseinrichtung gegenüber einer Fahrzeugstruktur zusätzliches Mittel geschaffen, das ein Aussenden einer hochenergetischen und damit insassengefährdenden Laserleistung verhindert. Weitere vorteilhafte Weiterbildungen der Erfindung sind durch die Unteransprüche gekennzeichnet.

Ausführungsbeispiele der Erfindung und ihrer Weiterbildungen werden anhand der Zeichnung näher erläutert. Es zeigen:
Figur 1 einen Querschnitt einer Fahrgastzelle,
Figur 2 ein Blockschaltbild der erfindungsgemäßen Vorrichtung,
Figur 3 das erfindungsgemäße Verfahren repräsentierende Signalabläufe, und
Figur 4 die Steuerung eines Lasers einer erfindungsgemäßen Vorrichtung als Blockschaltbild.

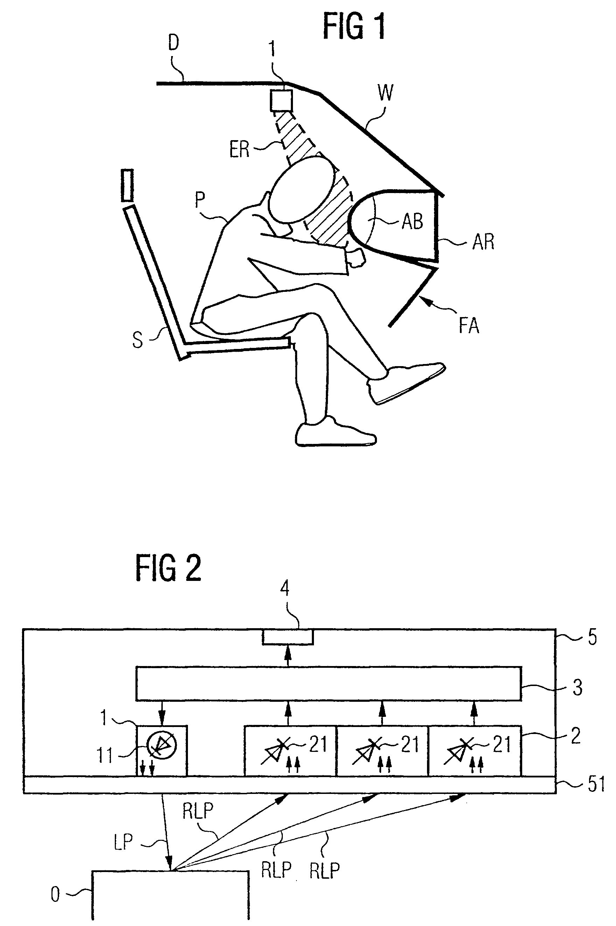

Figur 1 zeigt einen Querschnitt der vorderen Fahrgastzelle, beifahrerseitig, wobei alle Elemente symbolisch eingezeichnet sind. Dabei ist der Fahrzeuginnenraum durch ein Dach D, eine Windschutzscheibe W, ein Armaturenbrett AR und ein Fußablage FA begrenzt. Zur Abgrenzung des Fahrzeuginnenraums muß jedoch nicht notwendigerweise das Dach D und damit eine geschlossene Fahrgastzelle vorhanden sein. Es ist ein Fahrzeugsitz S ersichtlich, auf dem eine Person P in vorverlagerter Oberkörperposition sitzt. Am Dach D ist eine Vorrichtung V zum Erfassen eines Objektes oder einer Person angeordnet. Diese Einrichtung weist einen eingezeichneten Wirkungsbereich ER auf. Das Armaturenbrett AR enthält ein Beifahrerairbagmodul AB im zusammengefalteten Zustand. In entfaltetem Zustand schießt der Beifahrerairbag in Richtung Kopf der eingezeichneten Person P. Es ist ersichtlich, daß mit der eingezeichneten Objekterfassungseinrichtung der Gefahrenbereich vor einem zusammengefalteten Airbagmodul AB in Aufblasrichtung überwacht werden soll. Wird ein Insasse oder ein Kindersitz in diesem Wirkungsbereich ER erkannt, so wird ein Auslösen des Beifahrerairbagmoduls AB verhindert oder geeignet dosiert. Die Vorrichtung V kann jedoch auch auf den Fahrzeugsitz S gerichtet sein und eine Abweichung einer Person aus seiner normalen Sitzposition erfassen. Es sind auch Vorrichtungen bekannt, die den gesamten vorderen Fahrzeuginnenraum mit einer Mehrzahl von Sensoren abtasten und jegliche Arten von Objektoder Personenpositionen aufnehmen können. Die Erfindung ist also nicht beschränkt auf das konkrete Erfassen eines Abbildes eines Objektes oder einer Person sondern insbesondere auch zur Überwachung eines bestimmten Bereiches oder einer bestimmten Zone im Fahrzeuginnenraum auf das Vorhandensein eines Objektes oder einer Person. Die Einrichtung ist dabei zur berührungslosen Erfassung ausgebildet.

Der Sensor der Vorrichtung tastet seinen Wirkungsbereich mittels optischer Strahlung, insbesondere infraroter Strahlung ab. Es sind aber auch Strahlungen mit anderen Wellenlängen anwendbar. Der Sensor enthält dabei ein Leuchtdiode, insbesondere einen Infrarotsender in Form einer Laserdiode, der eine oder mehrere Strahlen oder Strahlungsvorhänge aussendet. Der Sensor enthält ferner ein oder mehrere optische Empfangselemente in Form von Fotozellen, die die an einem Objekt oder einer Person reflektierte oder gestreute Strahlung aufnehmen. Durch Auswertung der reflektierten Strahlung kann der Abstand zwischen dem Sensor und dem Objekt sowie gegebenenfalls eine Konturierung und genaue Positionsbestimmung im zwei- oder dreidimensionalen Raum bestimmt werden. Vorzugsweise spannt der Sensor mehrere in Fahrtrichtung hintereinandergestaffelte Strahlenvorhänge in der vertikalen Ebene auf und enthält hinsichtlich der Querachse des Fahrzeugs mehrere Empfangselemente je Strahlenvorhang. So ist eine dreidimensionale Personenoder Objekterkennung gewährleistet, da jedes Empfangselement einen Information zweidimensionaler Wertigkeit liefert und die dritte, vertikale Dimension durch eine Auswertung der Stärke, der Leistung oder des Energieinhalts einer reflektierten Strahlung gewonnen wird. Eine Erfassungseinrichtung mit einfachen technischen Mitteln weist z.B. nur eine den Entfaltungsraum des Airbgas abtastende Lichtschranke auf. Eine Objekt- oder Personenposition wird vorzugsweise mit Hilfe der Methoden der Laufzeitmessung oder der Triangulation ermittelt.

Figur 2 zeigt das Blockschaltbild einer erfindungsgemäßen Vorrichtung. Dabei enthält ein Gehäuse 5 einen Laser 1 mit einer Laserdiode 11 und einen optischen Empfänger 2 mit drei Empfangselementen 21, die als Fotodioden ausgebildet sind, sowie eine Steuereinrichtung 3. Zur Ermittlung des Vorhandenseins eines Objektes im Strahlengang des Laserpulses LP genügt die Ausbildung des optischen Empfängers 2 mit einem Empfangselement 21. Sind mehrere Empfangselemente 21 vorgesehen, so kann über das Vorhandensein eines Objektes hinaus auch dessen Position festgestellt werden. Der Laser 1 sendet ein Laserpuls LP im Infrarotbereich aus, der an einem Objekt O reflektiert wird und als reflektierter Laserpuls LP von zumindest einem der Empfangselemente 21 erfaßt wird.

Die Funktion der Vorrichtung ist durch Signale repräsentierende Pfeile abgehend und eintreffend an der Steuereinrichtung 3 gekennzeichnet. Die Steuereinrichtung 3 steuert den Betrieb des Lasers 1. Sie empfängt Signale von den Fotoelementen 21 und wertet diese aus. Auswertungsergebnisse werden über eine Schnittstelle 4 an eine entfernt von der Objekterfassungsvorrichtung angeordnete Insassenschutzmittelsteuerung übermittelt.

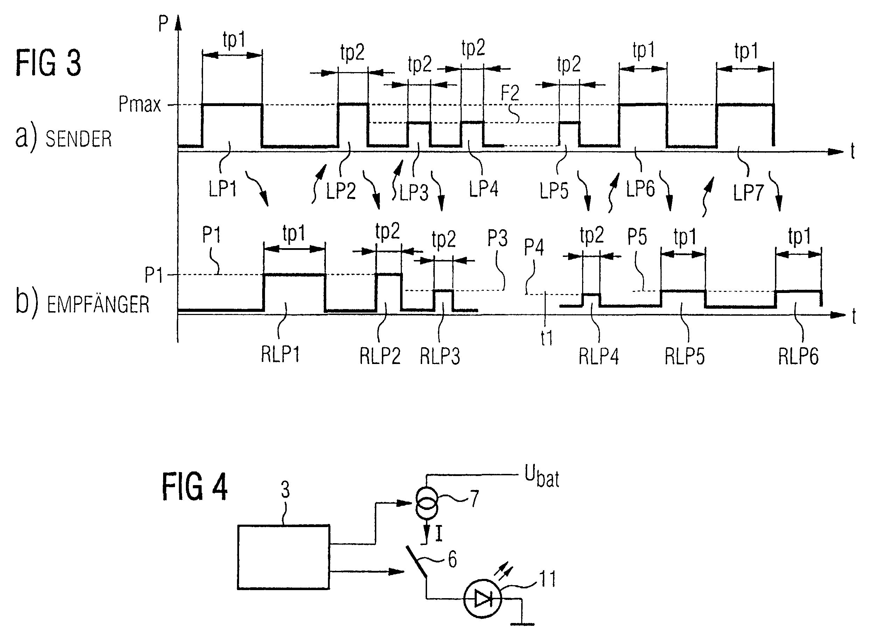

Figur 3 zeigt eine das erfindungsgemäße Verfahren repräsentierende Signalfolge. Dabei sind im Diagramm 3a) von dem Laser 1 als Sender emittierte Laserpulse LP mit einer Leistung P über die Zeit t eingetragen. Diagramm 3b) zeigt reflektierte, erfaßte Laserpulse RLP mit einer Leistung P über der Zeit t. Dabei kennzeichnet ein Wirkungspfeil die Zugehörigkeit eines erfaßten, reflektierter Laserpuls RLP als Reaktion auf einen ausgesendeten Laserpuls LP. In entgegengesetzter Wirkungsrichtung von den reflektierten Laserpulsen RLP zu den nachfolgenden Laserpulsen LP sind ebenfalls Wirkungspfeile eingezeichnet, die eine Modifikation des Laserpulses LP als Reaktion der Auswertung des vorhergehenden reflektierten Laserpulses RLP im erfindungsgemäßen Sinne kennzeichnen.

Initial wird ein Laserpuls LP1 mit einer Grenzleistung P_{MAX} und einer Pulsdauer tp1 aqusgegeben. Der Energieinhalt dieses Laserpulses LP1 ergibt sich aus dem Produkt seiner Pulsdauer tp1 und seiner Leistung P_{MAX}. Zu Beginn einer Abtastung wird vorzugsweise immer ein hochenergetischer Laserpuls LP1 mit maximaler Leistung und maximaler Pulsdauer ausgesendet, um auch ein ggf. weit entferntes Objekt noch ausreichend erkennen zu können. Das erfindungsgemäße Verfahren bietet im folgenden die Möglichkeit, den Energieinhalt der folgenden Laserpulse LP zu regeln.

Gemäß Figur 3 wird durch den optischen Empfänger als Reaktion auf den ausgesendeten Laserpuls LP1 ein reflektierter Laserpuls RLP1 erfaßt, der ebenfalls die Pulsdauer tp1 aufweist sowie eine Leistung P1 < P_{MAX}. Die Steuereinrichtung 3 erkennt durch Auswertung des Energieinhalts des reflektierten Laserpulses RLP1 ein relativ nahe an der Erfassungsvorrichtung angeordnetes Objekt, das darüberhinaus gute Reflexionseigenschaften aufweist. Aufgrund der räumlichen Anordnung dieses Objektes ist es im folgenden nicht mehr erforderlich, Laserpulse mit dem maximalen Energieinhalt auszusenden. Die Steuereinrichtung 3 emittiert im folgenden einen Laserpuls LP2 mit gleicher maximaler Laserleistung P_{MAX} aber geringerer Pulsbreite tp2 < tp1 und damit verringertem Energieinhalt. Der reflektierte Laserpuls RLP2 als Reaktion auf den Laserpuls LP2 wird wiederum erfaßt und ausgewertet. Der Energieinhalt des reflektierten Laserpulses RLP2 wird - wie auch beim reflektierten Laserpuls RLP1 - mit einem vorgegebenen Empfindlichkeits-Grenzwert verglichen. Der Energieinhalt des reflektierten Laserpulses RLP2 sei dabei weiterhin größer als dieser in einem Speicher der Steuereinrichtung 3 abgelegte Empfindlichkeits-Grenzwert, so daß im folgenden ein Laserpuls LP3 ausgesendet wird, der in seiner Leistung P2 < P_{MAX} verringert ist. Die Pulsdauer tp2 sei beibehalten, da diese Pulsdauer tp2 die technologisch bedingte minimale Pulsdauer des Systems Steuereinrichtung 3, Laser 1 sei. Der aus dem Laserpuls LP3 hervorgehende reflektierte Laserpuls RLP3 weist nunmehr einen Energieinhalt bestimmt durch eine Leistung P3 und die Pulsdauer tp2 auf, der wiederum mit dem Empfindlichkeits-Grenzwert verglichen wird. Dieser Energieinhalt entspricht nun dem Empfindlichkeits-Grenzwert, so daß die Vorrichtung nunmehr bezogen auf das erkannte Objekt in einem energieoptimierten Zustand betrieben werden kann.

Zum Zeitpunkt t1 habe sich nun das zuvor nah an der Erfassungseinrichtung empfindliche Objekt wesentlich von der Erfassungseinrichtung entfernt. Der auf den Laserpuls LP 5 aufgenommene reflektierte Laserpuls RLP4 weist nur noch eine Leistung P4 auf, die wesentlich geringer ausgebildet ist als die Leistung P3. Damit liegt der Energieinhalt des reflektierten Laserpulses RLP4 unter dem vorgegebenen Empfindlichkeits-Grenzwert, der ein hinreichend genaues Erfassen des Objektes kennzeichnet. Als Reaktion darauf wird gemäß Figur 3 der folgenden Sendepuls LP6 wiederum in seinem Energieinhalt erhöht. Dabei weist der Laserpuls LP6 die Kenngrößen P_{MAX} und tp1 des Laserpulses LP1 auf. Die Steuereinrichtung kann also bei einer zu vergrößernden Sendeleistung entweder einen Laserpuls mit maximalem Energieinhalt aussenden oder den Ennergieinhalt des vorangegangenen Laserpulses um einen Wert erhöhen, der proportional zur Differenz zwischen dem Energieinhalt des zuletzt erfaßten, reflektierten Laserpulses RLP4 und dem Empfindlichkeits-Grenzwert.

Der reflektierte Laserpuls RLP5 mit der Leistung P4 < P5 < P3 weise nun weiterhin einen Energieinhalt unterhalb des Empfindlichkeits-Grenzwertes auf. Dieser Fall wird bei einer exakt abgestimmten Vorrichtung nicht auftreten, da ein Sendestrahl einer solchen Vorrichtung auch ohne das Vorhandensein einer Person zumindest von einer Fahrzeugstruktur reflektiert wird. Ein von dieser Fahrzeugstruktur reflektiertes Signal bei maximaler Sendeleistung enthält einen ausreichenden Energieinhalt über dem Empfindlichkeits-Grenzwert. Der hypothetische, reflektierte Laserimpuls RLP5 hat keine Erhöhung des Energieinhalts des folgenden Laserpulses LP7 zur Folge, da der maximale Energieinhalt eines auszusendenden Laserpulses bereits einen Gefährdungsgrenzwert P_{MAX} x Ttp erreicht hat. Aus Sicherheitsgründen wird im folgenden weder die Sendeleistung noch die Pulsdauer erhöht.

Figur 4 zeigt eine Steuerung des Lasers 1 der erfindungsgemäßen Vorrichtung. Dabei ist die Laserdiode 11 über eine als Schalttransistor ausgebildete, elektrisch steuerbare Leistungsstufe 6 mit einer steuerbaren Stromquelle 7 verbunden. Zum Erzeugen von Laserpulsen schaltet die Steuereinrichtung 3 die Leistungsstufe 6 für eine vorgegebene Pulsdauer tp leitend. Die Sendeleistung des Lasers 1 ist bei leitend geschalteter Leistungsstufe 6 durch den von der steuerbaren Stromquelle 7 gelieferten Betriebsstrom I bestimmt. Die Steuereinrichtung 3 ist zum Steuern des Betriebsstromes I der Laserdiode 11 ausgebildet.

## Patentansprüche

1. Vorrichtung zum Erfassen eines Objektes oder einer Person im Innenraum eines Fahrzeugs,
mit einem Laser (1) zum Aussenden von Laserpulsen (LP), und mit einem optischen Empfänger (2) für an einem Objekt (0) oder an einer Person (P) reflektierter oder gestreuter Laserpulse (RLP),
**dadurch gekennzeichnet,**
**daß** eine Steuereinrichtung (3) vorgesehen ist zum Einstellen eines Energieinhalts eines folgenden Laserpulses (LP) abhängig von einer Kenngröße eines aufgenommenen oder reflektierten Laserpulses (RLP).

2. Vorrichtung nach Anspruch 1, **dadurch gekennzeichnet, daß** die Steuereinrichtung (3) ausgebildet ist zum Einstellen der Sendeleistung (P) des Lasers (1).

3. Vorrichtung nach Anspruch 1 oder Anspruch 2, **dadurch gekennzeichnet, daß** die Steuereinrichtung (3) ausgebildet ist zum Einstellen der Pulsdauer (tp) des Laserpulses (LP).

4. Vorrichtung nach Anspruch 3, **dadurch gekennzeichnet, daß** die Steuereinrichtung (3) ausgebildet ist zum Einstellen der Pulsdauer (tp) bei einer vorgegebenen Laserleistung (Pmax) und zum Einstellen der Laserleistung (p) abweichend von der vorgegebenen Laserleistung (Pmax), sobald die Pulsdauer (tp) einen vorgegebenen Grenzwert (tp2) unterschreitet.

5. Vorrichtung nach einem der vorhergehenden Ansprüche, **dadurch gekennzeichnet, daß** die Steuereinrichtung (3) ausgebildet ist zum Verringern des Energieinhalts des folgenden Laserpulses (LP) ausgehend von seinem aktuellen Energieinhalt für den Fall, daß die Kenngröße des reflektierten Laserpulses (RLP) einen zugeordneten Empfindlichkeits-Grenzwert überschreitet.

6. Vorrichtung nach Anspruch 5, **dadurch gekennzeichnet, daß** die Steuereinrichtung (3) ausgebildet ist zum Erhöhen des Energieinhalts des folgenden Laserpulses (LP) ausgehend von seinem aktuellen Energieinhalt für den Fall, daß die Kenngröße des reflektierten Laserpulses (RLP) einen zugeordneten Empfindlichkeits-Grenzwert unterschreitet.

7. Vorrichtung nach Anspruch 6, **dadurch gekennzeichnet, daß** die Steuereinrichtung (3) ausgebildet ist zum Erhöhen des Energieinhalts des folgenden Laserpulses (LP) nur bis zu einem zugeordneten Gefährdungs-Grenzwert (Pmax).

8. Vorrichtung nach einem der vorhergehenden Ansprüche, **dadurch gekennzeichnet, daß** der optische Empfänger (2) mehrere Empfangselemente (21) enthält, die mit dem Laser (1) zusammenwirken, und daß die Steuereinrichtung (3) ausgebildet ist zum Erhöhen oder Erniedrigen des Energieinhalts des folgenden Laserpulses (LP) ausgehend von seinem aktuellen Energieinhalt für den Fall, daß die Kenngröße zumindest eines der von den Empfangselementen (21) aufgenommenen reflektierten Laserpulse (RLP) einen zugeordneten Grenzwert unterschreitet beziehungsweise überschreitet.

9. Vorrichtung nach einem der vorhergehenden Ansprüche, **dadurch gekennzeichnet, daß** als Kenngröße die Stärke oder die Leistung (P) oder der Energieinhalt des reflektierten Laserpulses (RLP) verwendet wird.

10. Verfahren zum Erfassen eines Objektes oder einer Person im Innenraum eines Fahrzeugs, insbesondere zum Betreiben einer Vorrichtung nach einem der vorhergehenden Ansprüche,
- bei dem ein Laserpuls (LP) ausgesendet wird,
- bei dem der an einem Objekt (O) oder einer Person (P) reflektierete Laserpuls (RLP) aufgenommen wird,
**dadurch gekennzeichnet, daß** der Energieinhalt eines folgenden Laserpulses (LP) bestimmt ist durch eine Kenngröße des reflektierten Laserpulses (RLP).

## Claims

1. Device for sensing an object or a person in the interior of a vehicle, having a laser (1) for emitting laser pulses (LP), and having an optical receiver (2) for laser pulses (RLP) which are reflected or scattered at an object (O) or at a person (P), **characterized in that** a control device (3) is provided for setting an energy content of a following laser pulse (LP) as a function of a characteristic variable of a laser pulse (RLP) which is received or reflected.

2. Device according to Claim 1, **characterized in that** the control device (3) is designed to set the transmission power (P) of the laser (1).

3. Device according to Claim 1 or Claim 2, **characterized in that** the control device (3) is designed to set the pulse length (tp) of the laser pulse (LP).

4. Device according to Claim 3, **characterized in that** the control device (3) is designed to set the pulse length (tp) for a predefined laser power (Pmax) and to set the laser power (p) differently from the predefined laser power (Pmax) as soon as the pulse length (tp) drops below a predefined limiting value (tp2).

5. Device according to one of the preceding claims, **characterized in that** the control device (3) is designed to reduce the energy content of the following laser pulse (LP) starting from its current energy content in the event of the characteristic variable of the reflected laser pulse (RLP) exceeding an assigned sensitivity limiting value.

6. Device according to Claim 5, **characterized in that** the control device (3) is designed to increase the energy content of the following laser pulse (LP) starting from its current energy content in the event of the characteristic variable of the reflected laser pulse (RLP) dropping below an assigned sensitivity limiting value.

7. Device according to Claim 6, **characterized in that** the control device (3) is designed to increase the energy content of the following laser pulse (LP) only up to an assigned hazardous limiting value (Pmax).

8. Device according to one of the preceding claims, **characterized in that** the optical receiver (2) contains a plurality of receiver elements (21) which interact with the laser (1), and **in that** the control device (3) is designed to increase or decrease the energy content of the following laser pulse (LP) starting from its current energy content in the event of the characteristic variable of at least one of the reflected laser pulses (RLP) which are received by the receiver elements (21) dropping below or exceeding an assigned limiting value.

9. Device according to one of the preceding claims, **characterized in that** the strength or the power (P) or the energy content of the reflected laser pulse (RLP) is used as characteristic variable.

10. Method for sensing an object or a person in the interior of a vehicle, in particular for operating a device according to one of the preceding claims,
- in which a laser pulse (LP) is emitted,
- in which the laser pulse (RLP) which is reflected at an object (O) or a person (P) is received,
**characterized in that** the energy content of a following laser pulse (LP) is determined by means of a characteristic variable of the reflected laser pulse (RLP).

## Revendications

1. Dispositif permettant de détecter un objet ou une personne dans l'habitable d'un véhicule,
comprenant un laser (1) servant à émettre des impulsions laser (LP), et un récepteur optique (2) servant à capter des impulsions laser (RLP) réfléchies ou diffusées par un objet (O) ou une personne (P),
**caractérisé en ce qu'**
un dispositif de commande (3) est prévu pour régler un contenu énergétique d'une impulsion laser (LP) suivante en fonction d'une grandeur caractéristique d'une impulsion laser captée ou réfléchie (RLP).

2. Dispositif selon la revendication 1, **caractérisé en ce que** le dispositif de commande (3) est conçu pour régler la puissance d'émission (P) du laser (1).

3. Dispositif selon la revendication 1 ou 2, **caractérisé en ce que** le dispositif de commande (3) est conçu pour régler la durée d'impulsion (tp) de l'impulsion laser (LP).

4. Dispositif selon la revendication 3, **caractérisé en ce que** le dispositif de commande (3) est conçu pour régler la durée d'impulsion (tp) pour une puissance laser prédéfinie (Pmax) ainsi que pour régler la puissance laser (p) sur une valeur qui diffère de la puissance laser prédéfinie (Pmax), dès que la durée d'impulsion (tp) descend au-dessous d'une valeur de seuil prédéfinie (tp2).

5. Dispositif selon l'une des revendications précédentes, **caractérisé en ce que** le dispositif de commande (3) est conçu pour réduire le contenu énergétique de l'impulsion laser (LP) suivante en partant de son contenu énergétique actuel si la grandeur caractéristique de l'impulsion laser réfléchie (RLP) dépasse une valeur seuil de sensibilité qui lui a été attribuée.

6. Dispositif selon la revendication 5, **caractérisé en ce que** le dispositif de commande (3) est conçu pour augmenter le contenu énergétique de l'impulsion laser (LP) suivante en partant de son contenu énergétique actuel si la grandeur caractéristique de l'impulsion laser réfléchie (RLP) descend au-dessous d'une valeur seuil de sensibilité qui lui a été attribuée.

7. Dispositif selon la revendication 6, **caractérisé en ce que** le dispositif de commande (3) est conçu pour augmenter le contenu énergétique de l'impulsion laser (LP) suivante uniquement jusqu'à une valeur seuil de mise en danger (Pmax) qui lui a été attribuée.

8. Dispositif selon l'une des revendications précédentes, **caractérisé en ce que** le récepteur optique (2) comprend plusieurs éléments récepteurs (21) qui coopèrent avec le laser (1), et **en ce que** le dispositif de commande (3) est conçu pour augmenter ou abaisser le contenu énergétique de l'impulsion laser (LP) suivante en partant de son contenu énergétique actuel si la grandeur caractéristique d'au moins une des impulsions laser réfléchies (RLP) captée par les éléments récepteurs (21) passe au-dessous ou au-dessus d'une valeur de seuil qui lui a été attribuée.

9. Dispositif selon l'une des revendications précédentes, **caractérisé en ce qu'**on utilise, comme grandeur caractéristique, l'intensité ou la puissance (P) ou le contenu énergétique de l'impulsion laser réfléchie (RLP).

10. Procédé permettant de détecter un objet ou une personne dans l'habitacle d'un véhicule, en particulier dans le but de faire fonctionner un dispositif selon l'une des revendications précédentes, procédé lors duquel
- une impulsion laser (LP) est émise,
- une impulsion laser (RLP) réfléchie par un objet (O) ou une personne (P) est captée,
**caractérisé en ce que** le contenu énergétique d'une impulsion laser (LP) suivante est déterminé par une grandeur caractéristique de l'impulsion laser réfléchie (RLP).
